# EUROPEAN PATENT APPLICATION

(11) **EP 4 131 135 A1**
(43) Date of publication of application: **08.02.2023**
(21) Application number: 20927998.3
(22) Date of filing: 27.03.2020
(51) Int. Cl.: G06Q 50/30

(54) **MANAGEMENT SERVER, SYSTEM, TOKEN ISSUANCE METHOD, AND STORAGE MEDIUM**

(71) Applicant: NEC Corporation, 108-8001 Tokyo (JP)
(72) Inventor: WATANABE Yuuka, Tokyo 108-8001 (JP); SASAMOTO Takeshi, Tokyo 108-8001 (JP)
(74) Representative: Betten & Resch
(86) International application number: PCT/JP2020/013892
(87) International publication number: WO 2021/192193

(57) **Abstract**

Provided is a management server that excludes a user who is not qualified to use a boarding system utilizing biometric authentication. The management server includes a receiving unit and a generation unit. The receiving unit receives, from a terminal, a token issuance request including at least boarding pass information written on a boarding pass, and passport information written on a passport. The generation unit makes a first determination about consistency between the boarding pass information and the passport information, and generates, on the basis of the result of the first determination, a token for a user to use a boarding process utilizing biometric information.

## Description

### [Technical Field]

The present invention relates to a management server, a system, a token issuance method, and a storage medium.

### [Background Art]

PTL 1 discloses a ticketless boarding system that performs various procedures by face authentication at a plurality of check points (check-in lobby, safety inspection area, boarding gate, and the like) in an airport using passenger's biometric information (face image).

### [Citation List]

### [Patent Literature]

[PTL 1] JP 2007-079656 A

### [Summary of Invention]

### [Technical Problem]

PTL 1 merely discloses a configuration for using the face authentication for a specific operation in an airport, and does not disclose conditions and the like regarding system registration for using the face authentication.

For international boarding, in principle, a user permitted to board the aircraft boards the aircraft. The same similarly applies to a boarding procedure using the biometric authentication, and the user who has received issuance of a boarding pass can board the aircraft through the boarding procedure using the biometric authentication. That is, it is necessary to verify eligibility of the user who desires the boarding procedure using the biometric authentication, and the user who has not received issuance of the boarding pass is not qualified to use the boarding procedure using the biometric authentication.

A main object of the present invention is to provide a management server, a system, a token issuance method, and a storage medium that contribute to excluding users who are not qualified to use a boarding procedure system using biometric authentication.

### [Solution to Problem]

According to the first aspect of the present invention, there is provided a management server including: a receiving unit configured to receive, from a terminal, a token issuance request including at least boarding pass information described on a boarding pass and passport information described in a passport; and a generation unit configured to make a first determination regarding consistency between the boarding pass information and the passport information and generate a token for a user to use a boarding procedure using biometric information based on a result of the first determination.

According to the second aspect of the present invention, there is provided a system including: a terminal; and a management server connected to the terminal, in which the management server includes a receiving unit configured to receive, from the terminal, a token issuance request including at least boarding pass information described on a boarding pass and passport information described in a passport, and a generation unit configured to make a first determination regarding consistency between the boarding pass information and the passport information and generate a token for a user to use a boarding procedure using biometric information based on a result of the first determination.

According to the third aspect of the present invention, there is provided a token issuance method including: by a management server, receiving, from a terminal, a token issuance request including at least boarding pass information described on a boarding pass and passport information described in a passport; and making a first determination regarding consistency between the boarding pass information and the passport information and generating a token for a user to use a boarding procedure using biometric information based on a result of the first determination.

According to the fourth aspect of the present invention, there is provided a computer-readable storage medium storing a program for causing a computer mounted on a management server to execute: processing of receiving, from a terminal, a token issuance request including at least boarding pass information described on a boarding pass and passport information described in a passport; and processing of making a first determination regarding consistency between the boarding pass information and the passport information and generating a token for a user to use a boarding procedure using biometric information based on a result of the first determination.

### [Advantageous Effects of Invention]

According to each aspect of the present invention, there is provided a management server, a system, a token issuance method, and a storage medium that contribute to excluding users who are not qualified to use a boarding procedure system using biometric authentication. The effect of the present invention is not limited to the above. According to the present invention, other effects may be exhibited instead of or in addition to the effect.

### [Brief Description of Drawings]

Fig. 1 is a diagram for describing an outline of an example embodiment.
Fig. 2 is a diagram illustrating an example of a schematic configuration of a boarding procedure system according to a first example embodiment.
Fig. 3 is a diagram illustrating an example of a processing configuration of a check-in terminal according to the first example embodiment.
Fig. 4 is a diagram for describing an operation of a system registration unit according to the first example embodiment.
Fig. 5 is a diagram illustrating an example of a processing configuration of the system registration unit according to the first example embodiment.
Fig. 6 is a diagram illustrating an example of a token issuance request.
Fig. 7 is a diagram illustrating an example of a processing configuration of a baggage checking machine according to the first example embodiment.
Fig. 8 is a diagram illustrating an example of a processing configuration of a management server according to the first example embodiment.
Fig. 9 is a diagram illustrating an example of a token ID information database.
Fig. 10 is a diagram illustrating an example of an operation information database.
Fig. 11 is a sequence diagram illustrating an example of an operation of the boarding procedure system according to the first example embodiment.
Fig. 12 is a diagram illustrating an example of a hardware configuration of the management server.

### [Example Embodiment]

First, an outline of an example embodiment will be described. Note that the reference numerals in the drawings attached to this outline are attached to elements for convenience as an example for assisting understanding, and description of this outline is not intended to be any limitation. In addition, in a case where there is no particular explanation, a block illustrated in each drawing represents not a configuration in hardware units but a configuration in functional units. A connection line between blocks in each drawing includes both bidirectional and unidirectional lines. A unidirectional arrow schematically indicates a flow of a main signal (data) and does not exclude bidirectionality. In the present specification and drawings, elements that can be similarly described are denoted by the same reference numerals, and redundant description can be omitted.

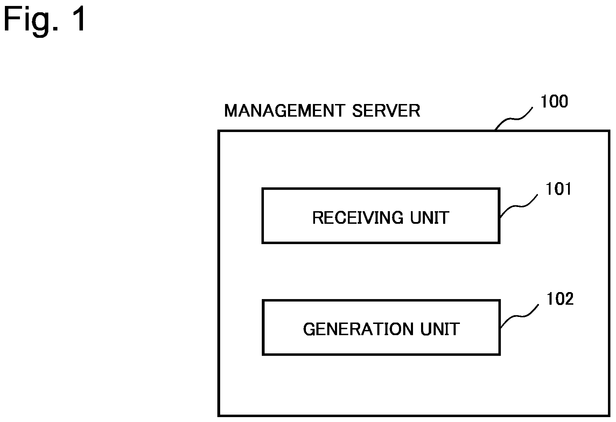

A management server 100 according to an example embodiment includes a receiving unit 101 and a generation unit 102 (see Fig. 1). The receiving unit 101 receives, from a terminal, a token issuance request including at least boarding pass information described on a boarding pass, and passport information described in a passport. The generation unit 102 makes a first determination about consistency between the boarding pass information and the passport information, and generates a token for a user to use a boarding procedure using biometric information on the basis of a result of the first determination.

As described above, the user who is not qualified to use a boarding procedure system using biometric authentication needs to be excluded. Here, when a passenger boards an international flight, the passenger himself/herself needs to carry a boarding pass (BP) and a passport (PP). In the boarding procedure not based on biometric authentication, a staff member of the airline visually confirms that a name written on the boarding pass is the same as a name written on the passport. However, such identification by a staff member cannot be performed in the boarding procedure using biometric authentication. In the boarding procedure using biometric authentication, there is almost no room for human intervention because it is automated by a computer (server or terminal). Therefore, if the names described on the boarding pass and the passport are spelled differently, a part of the name is omitted, or the order of description (order of surname and first name) is different, it becomes very difficult to determine whether the persons described on the boarding pass and the passport are the same person. That is, in the boarding procedure using biometric authentication, a problem regarding matching of names described in two media (the boarding pass and the passport) may occur. To cope with such a problem, it is conceivable to omit the matching of the names, but if such a measure is taken, there is room for allowing a third party who has illegally obtained the boarding pass to board the aircraft.

To cope with such a problem, the management server 100 checks the consistency between the boarding pass and the passport acquired through the terminal. For example, the management server 100 transmits the acquired boarding pass information to a server (airline server 30 to be described below) managed by the airline, and inquires of the passport information relevant to the boarding pass information. If the passport information presented on the terminal matches the passport information obtained from the airline, the management server 100 determines that the passport of the passenger who is permitted to board the aircraft is presented on the terminal, and issues a token for receiving the boarding procedure using biometric authentication. In other words, if the two pieces of passport information do not match, the management server 100 determines that a third party who has not received the issuance of the boarding pass (the user who is not qualified to use the boarding procedure using biometric authentication) presents the passport to the terminal, and does not issue the token. As described above, the management server 100 performs identity confirmation by collating the passport information held by the airline server (departure control system; DCS) that stores reservation information that is the basis for the boarding pass information with the passport information held by the user on a departure date. As a result, the token is not issued to a third party who is not qualified to use the boarding procedure system using biometric authentication, and the third party is excluded from users using the boarding procedure using biometric authentication.

Hereinafter, specific example embodiments will be described in more detail with reference to the drawings.

### [First Example Embodiment]

A first example embodiment will be described in more detail with reference to the drawings.

### [Configuration of System]

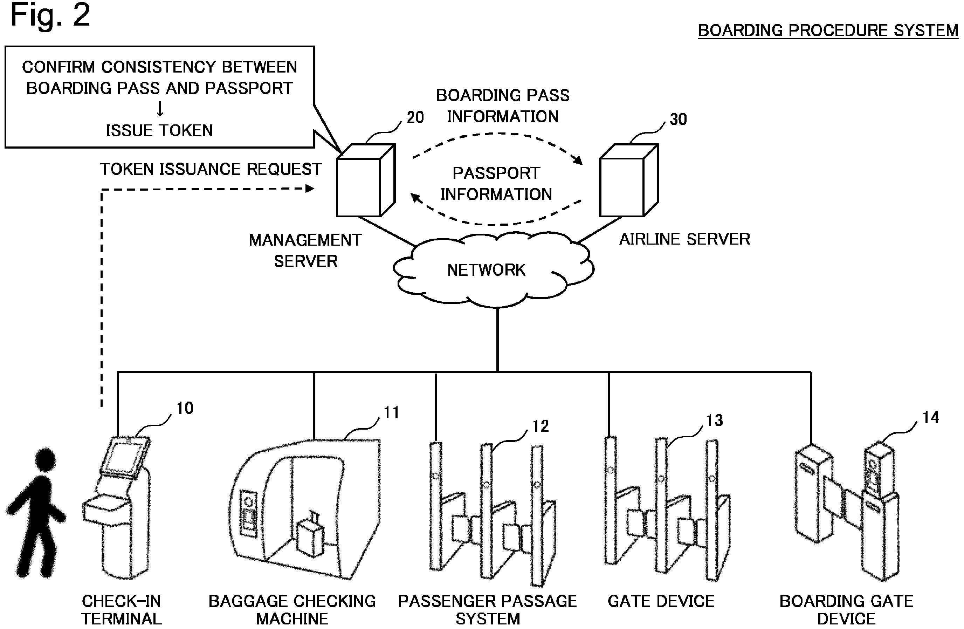

Fig. 2 is a diagram illustrating an example of a schematic configuration of a boarding procedure system according to the first example embodiment. The boarding procedure system according to the first example embodiment is a system that implements a series of procedures (deposit of baggage, security check, and the like) at an airport by biometric authentication. The boarding procedure system illustrated in Fig. 2 is operated by, for example, a public institution such as a control station for immigration or emigration, or an entity who has accepted a commission from the public institution.

Note that, in the present disclosure, a "boarding procedure" indicates the series of procedures performed from check in to boarding the aircraft.

Referring to Fig. 2, the boarding procedure system includes a check-in terminal 10, a baggage checking machine 11, a passenger passage system 12, a gate device 13, a boarding gate device 14, a management server 20, and an airline server 30.

The check-in terminal 10, the baggage checking machine 11, the passenger passage system 12, the gate device 13, and the boarding gate device 14 are terminals (touch points) installed at the airport. These terminals are connected to the management server 20 via a network. The network illustrated in Fig. 2 includes a local area network (LAN) including an airport local communication network, a wide area network (WAN), a mobile communication network, and the like. The connection method is not limited to a wired method and may be a wireless method.

The management server 20 and the airline server 30 are also connected via the network. The management server 20 and the airline server 30 are installed in a facility of an airport company or an airline company. Alternatively, these servers may be servers installed in a cloud on the network.

Note that the configuration illustrated in Fig. 2 is an example and is not intended to limit the configuration of the boarding procedure system. The boarding procedure system may include a terminal (not illustrated) and the like.

The boarding procedure of the user is performed by each terminal illustrated in Fig. 2. Specifically, the series of procedures when the user leaves a country is sequentially performed by the terminals installed at five places. In the boarding procedure system illustrated in Fig. 2, the boarding procedure of the user is implemented by authentication (biometric authentication) using biometric information.

When arriving at the airport, the user (system user) who desires the boarding procedure by biometric authentication operates the check-in terminal 10 to perform a "check-in procedure". The system user presents a paper airline ticket, a two-dimensional barcode describing boarding information, a mobile terminal displaying a copy of an e-ticket, or the like to the check-in terminal 10. When the check-in procedure is completed, the check-in terminal 10 outputs a boarding pass. The boarding pass includes a boarding pass of a paper medium and a boarding pass of an electronic medium.

The system user who has completed the check-in procedure and desires the boarding procedure by biometric authentication performs system registration using the check-in terminal 10. Specifically, the system user causes the check-in terminal 10 to read the acquired boarding pass and the passport. Furthermore, the check-in terminal 10 acquires the biometric information (for example, a face image) of the system user.

The check-in terminal 10 transmits these pieces of information (boarding pass, passport, and biometric information) to the management server 20.

The management server 20 confirms validity of the information acquired from the check-in terminal 10. Specifically, management server 20 determines consistency between the boarding pass and the passport and validity of the passport presented on the check-in terminal 10. The management server 20 registers the system user when having confirmed the validity of the information acquired from the check-in terminal 10. Specifically, the management server 20 issues a token to be used for the boarding procedure of the user registered in the system.

The issued token is identified by a token identifier (ID). The pieces of information necessary for the boarding procedure (for example, the biometric information, operation information necessary for the boarding procedure, and the like) are associated with the token ID. That is, the "token" is issued together with the registration of the system user, and is identification information for the registered system user to receive the boarding procedure using the biometric information. When the token (token ID) is issued, the system user becomes able to use the boarding procedure using the biometric authentication.

When the system user to which the token has been issued arrives at the terminal (for example, the baggage checking machine 11 and the like), the biometric information (for example, the face image) is acquired in the terminal. The terminal transmits an authentication request including the face image to the management server 20.

The management server 20 specifies the token ID by collation processing (one-to-N collation; N is a positive integer, and the same applies to below) using the biometric information acquired from the terminal and the biometric information registered in the system. The boarding procedure of the user is performed on the basis of the operation information associated with the specified token ID.

When the series of boarding procedures is completed and the user leaves the country (when the user passes through the boarding gate device 14), the token ID is deleted.

The check-in terminal 10 is installed in a check-in lobby in the airport. As described above, the user performs system registration for implementing the boarding procedure using the biometric authentication, using the check-in terminal 10. In addition, the system user performs operates the check-in terminal 10 to perform the check-in procedure. That is, the check-in terminal 10 is also a self-terminal for the user to operate to perform the check-in procedure. The check-in terminal 10 is also referred to as a common use self service (CUSS) terminal. When the user completes the check-in procedure, the user moves to a baggage drop area or a safety inspection area.

The baggage checking machine 11 is installed in an area adjacent to a baggage counter (manned counter) or an area near the check-in terminal 10 in the airport. The baggage checking machine 11 is a self-terminal for the user to operate to perform a procedure (baggage checking procedure) of checking baggage that is not brought into the aircraft. The baggage checking machine 11 is also referred to as a common use bag drop (CUBD) terminal. When the user completes the baggage checking procedure, the user moves to the safety inspection area. In a case where the user does not check baggage, the baggage checking procedure is omitted.

The passenger passage system 12 is a gate device installed at an entrance of the safety inspection area in the airport. The passenger passage system 12 is also referred to as a passenger reconciliation system (PRS), and is a system that determines whether the user can pass at the entrance of the safety inspection area. When the user completes a security inspection procedure after passing through the passenger passage system 12, the user moves to the departure inspection area.

The gate device 13 is installed in the departure inspection area in the airport. The gate device 13 is a device that automatically performs a departure inspection procedure of the user. After the departure inspection procedure is completed, the user moves to a departure area where duty-free shops and boarding gates are provided.

The boarding gate device 14 is a passage control device installed for each boarding gate in the departure area. The boarding gate device 14 is also referred to as an automated boarding gate (ABG) terminal. The boarding gate device 14 confirms that the user is a passenger of the aircraft that can be boarded from the boarding gate. After passing through the boarding gate device 14, the user boards the aircraft and leaves for a second country.

Note that the boarding procedure using the biometric authentication by each device (check-in terminal 10, baggage checking machine 11, passenger passage system 12, gate device 13, or boarding gate device 14) illustrated in Fig. 2 is an example, and is not intended to limit the device used for the procedure. For example, a device different from the above devices may be used for the boarding procedure, or some of the above devices may not be used for the procedure. For example, the gate device 13 may not be included in the boarding procedure system.

The management server 20 is a server device for supporting and managing the boarding procedure. The management server 20 manages the token ID. Specifically, the management server 20 issues or invalidates the token ID. Furthermore, the management server 20 processes authentication requests from various terminals in the airport.

The airline server 30 is a server device managed by an airline. The airline server 30 includes a database that stores airline ticket reservation information. The airline server 30 stores the information regarding the passport acquired at the time of reservation of an airline ticket and reservation information of the airline ticket in association with each other. The airline server 30 is also referred to as a departure control system (DCS). The airline server 30 may store all pieces of information described in the passport and the reservation information in association with each other, or may store some pieces of information described in the passport and the reservation information in association with each other.

In the following description, the information described in the boarding pass (some or all pieces of information described in the boarding pass) is written as "boarding pass information". The boarding pass information is some or all pieces of the reservation information stored in the airline server 30. That is, some or all pieces of the reservation information are written on the boarding pass.

Furthermore, in the following description, the information described in the passport (some or all pieces of information described in the passport) is written as "passport information".

### [Schematic Operation of System]

Next, a schematic operation of the boarding procedure system will be described with reference to Fig. 2.

Among the users who have arrived at the airport and completed the check-in procedure, the user (system user) who desires the boarding procedure using the biometric authentication operates the check-in terminal 10 to perform the system registration. As described above, the user causes the check-in terminal 10 to read the boarding pass and the passport that the user possesses. At that time, the check-in terminal 10 acquires biometric information (for example, the face image) of the user.

The check-in terminal 10 generates the "token issuance request" including the acquired three pieces of information (boarding pass information, passport information, and biometric information). The check-in terminal 10 transmits the generated token issuance request to the management server 20.

The management server 20 extracts the boarding pass information and the passport information included in the token issuance request. The management server 20 determines the consistency between the boarding pass and the passport presented on the check-in terminal 10 using the two pieces of information. Specifically, the management server 20 determines whether the person who is permitted to board the aircraft to which the boarding pass has been issued matches the person who has received the issuance of the passport presented on the check-in terminal 10.

The management server 20 transmits the boarding pass information (some or all pieces of the reservation information) acquired from the check-in terminal 10 to the airline server 30 in order to determine the consistency.

The airline server 30 searches the database using the acquired boarding pass information as a key, and transmits the relevant passport information to the management server 20.

The management server 20 compares the passport information acquired from the check-in terminal 10 with the passport information acquired from the airline server 30, and determines whether these pieces of information match.

In the case where the two pieces of passport information match, the management server 20 determines that the boarding pass presented on check-in terminal 10 and the passport are consistent.

Thereafter, the management server 20 determines the validity of the passport presented on check-in terminal 10. Specifically, the management server 20 determines whether the person who has presented the passport to the check-in terminal 10 and the person who has received the issuance of the passport are the same person. More specifically, the management server 20 determines whether the face image (hereinafter referred to as a passport face image) included in the passport information substantially matches the face image captured by the check-in terminal 10.

In the case where the two face images (biometric information) substantially match, the management server 20 determines that the system user has presented the correct passport to the check-in terminal 10 (determines that the passport presented to the check-in terminal 10 is valid).

In a case where a problem is not found in the two determinations (the determination regarding the consistency between the boarding pass information and the passport information and the determination regarding the validity of the passport presented to the check-in terminal 10), the management server 20 generates the token for the system user to receive the boarding procedure.

The management server 20 adds an entry to each of a database that stores detailed information of the generated token and a database that stores the operation information in response to the generation of the token.

In a case where a problem is found in at least one of the two determinations, the management server 20 rejects (refuses) the token issuance request from the check-in terminal 10.

Next, details of each device included in the boarding procedure system according to the first example embodiment will be described. The following description will be given using the "face image" of the user as an example of the biometric information.

### [Check-in Terminal]

As described above, the check-in terminal 10 is a device that provides the system user with the operations related to the check-in procedure and the system registration.

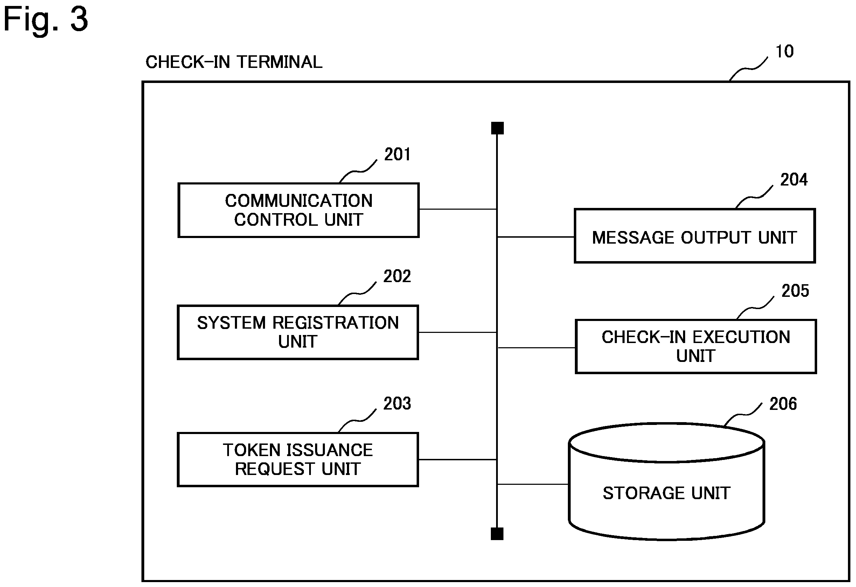

Fig. 3 is a diagram illustrating an example of a processing configuration (processing module) of the check-in terminal 10 according to the first example embodiment. Referring to Fig. 3, the check-in terminal 10 includes a communication control unit 201, a system registration unit 202, a token issuance request unit 203, a message output unit 204, a check-in execution unit 205, and a storage unit 206.

The communication control unit 201 is a means that controls communication with other devices. Specifically, the communication control unit 201 receives data (packets) from the management server 20 and the airline server 30. In addition, the communication control unit 201 transmits data to the management server 20 and the airline server 30. The communication control unit 201 delivers data received from another device to another processing module. The communication control unit 201 transmits data acquired from another processing module to another device. In this manner, the another processing module transmits and receives data to and from another device via the communication control unit 201. The communication control unit 201 functions as a transmission unit and a receiving unit.

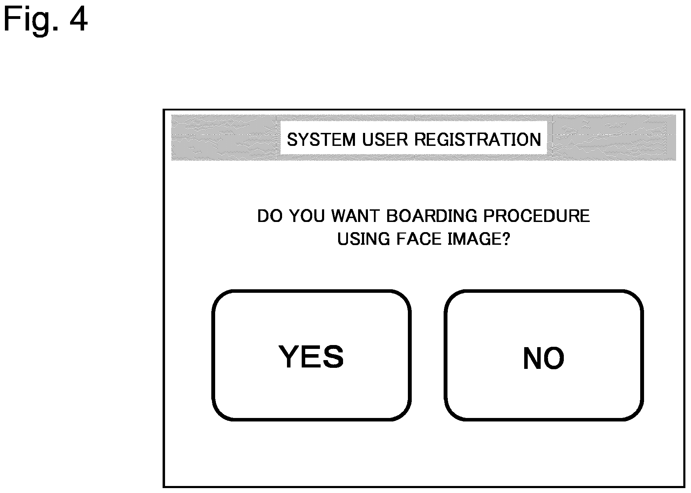

The system registration unit 202 is a means that performs system registration of the user who desires the boarding procedure by the biometric authentication. For example, after completion of the check-in procedure, the system registration unit 202 provides the user with a graphical user interface (GUI) for confirming whether the user wants the "boarding procedure using the face image" (see Fig. 4).

When the user desires the system registration, the system registration unit 202 acquires the three pieces of information (boarding pass information, passport information, and biometric information) using the GUI for acquiring the three pieces of information.

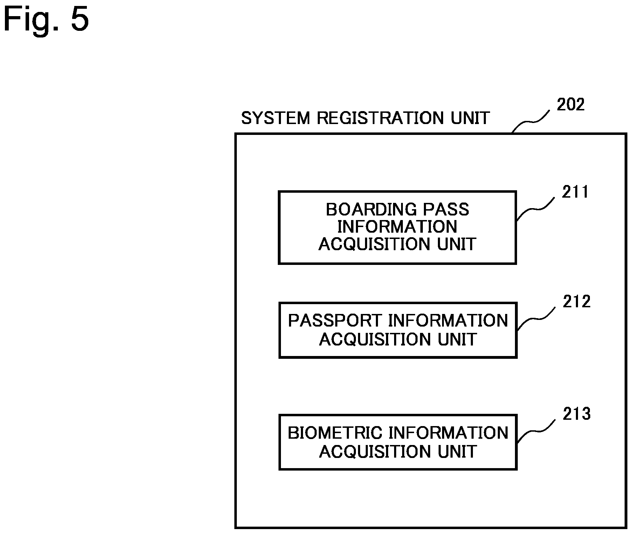

The system registration unit 202 includes three submodules. Fig. 5 is a diagram illustrating an example of a processing configuration (processing module) of the system registration unit 202 according to the first example embodiment. As illustrated in Fig. 5, the system registration unit 202 includes a boarding pass information acquisition unit 211, a passport information acquisition unit 212, and a biometric information acquisition unit 213.

The boarding pass information acquisition unit 211 is a means that acquires the boarding pass information from the boarding pass possessed by the system user. The boarding pass information acquisition unit 211 controls a reader (not illustrated) such as a scanner and acquires the information (boarding pass information) described on the boarding pass.

The boarding pass information includes a name (surname and first name), an airline code, a flight number, a departure date, a departure place (boarding airport), a destination (arrival airport), a seat number, a boarding time, an arrival time, and the like.

The passport information acquisition unit 212 is a means that acquires the passport information from the passport possessed by the system user. The passport information acquisition unit 212 controls the reader such as a scanner to acquire the information (passport information) described in the passport.

The passport information includes the passport face image, the name, gender, nationality, the passport number, the passport issuing country, and the like.

The biometric information acquisition unit 213 is a means that acquires the biometric information of the system user. The biometric information acquisition unit 213 controls a camera to acquire the face image of the system user. For example, when detecting the face in an image that is constantly or periodically captured, the biometric information acquisition unit 213 captures the face of the user to acquire the face image.

It is desirable that the biometric information acquisition unit 213 display a guidance message regarding capture of the face image via the message output unit 204 before capturing the face image. For example, the biometric information acquisition unit 213 displays a message such as "Your face image will be captured and registered in the system. The registered face image will be deleted from the system after completion of boarding".

The system registration unit 202 delivers the acquired three pieces of information (boarding pass information, passport information, and biometric information) to the token issuance request unit 203.

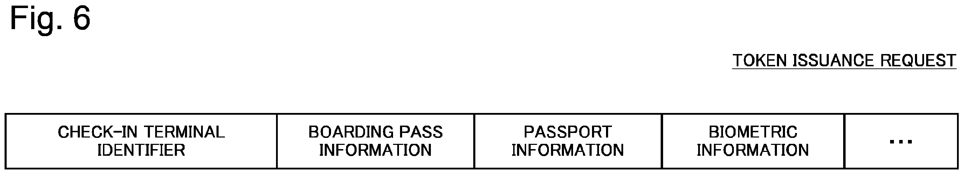

The token issuance request unit 203 illustrated in Fig. 3 is a means that requests the management server 20 to issue a token. The token issuance request unit 203 generates the token issuance request including the boarding pass information, the passport information, and the biometric information (face image). For example, the token issuance request unit 203 generates the token issuance request including an identifier (hereinafter referred to as a check-in terminal identifier) of the local device, the boarding pass information, and the like (see Fig. 6). As the check-in terminal identifier, a media access control (MAC) address or an Internet Protocol (IP) address of the check-in terminal 10 can be used. The token issuance request unit 203 transmits the generated token issuance request to the management server 20.

The token issuance request unit 203 delivers a response (a response to the token issuance request) acquired from the management server 20 to the message output unit 204.

The message output unit 204 is a means that outputs various messages. For example, the message output unit 204 outputs a message according to the response acquired from the management server 20.

In a case of receiving a response (affirmative response) indicating that the token has been successfully issued, the message output unit 204 outputs the fact. For example, the message output unit 204 outputs a message such as "The future procedure can be performed by face authentication".

In a case of receiving a response (negative response) indicating that issuance of the token has been failed, the message output unit 204 outputs the fact. For example, the message output unit 204 outputs a message such as "Sorry. The face authentication procedure cannot be performed. Please head to the manned booth".

The check-in execution unit 205 is a means that performs the check-in procedure of the user. The check-in execution unit 205 executes the check-in procedure such as selection of a seat on the basis of the airline ticket presented by the user. For example, the check-in execution unit 205 transmits the information described in the airline ticket to the DCS (airline server 30), and acquires the information described in the boarding pass from the DCS. Note that the operation of the check-in execution unit 205 can be the same as the operation of an existing check-in terminal, and thus more detailed description will be omitted.

The storage unit 206 is a means that stores information necessary for the operation of the check-in terminal 10.

### [Baggage Checking Machine]

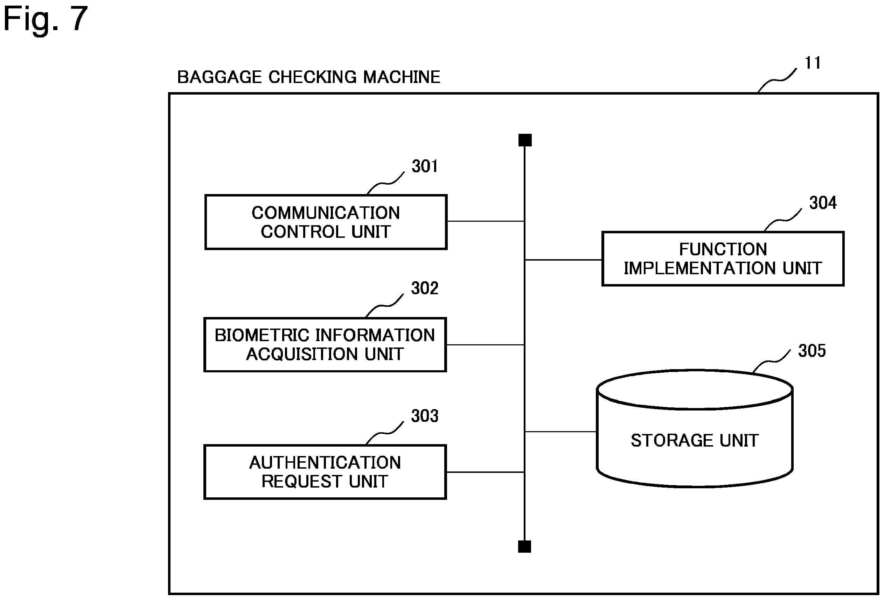

Fig. 7 is a diagram illustrating an example of a processing configuration (processing module) of the baggage checking machine 11 according to the first example embodiment. Referring to Fig. 7, the baggage checking machine 11 includes a communication control unit 301, a biometric information acquisition unit 302, an authentication request unit 303, a function implementation unit 304, and a storage unit 305.

The communication control unit 301 is a means that controls communication with other devices. Specifically, the communication control unit 301 receives data (packets) from the management server 20. In addition, the communication control unit 301 transmits data to the management server 20. The communication control unit 301 delivers data received from another device to another processing module. The communication control unit 301 transmits data acquired from another processing module to another device. In this manner, the another processing module transmits and receives data to and from another device via the communication control unit 301. The communication control unit 301 functions as a transmission unit and a receiving unit.

The biometric information acquisition unit 302 is a means that controls a camera (not illustrated) to acquire the biometric information of the user. The biometric information acquisition unit 302 images the front of the local device periodically or at predetermined timing. The biometric information acquisition unit 302 determines whether a face image of a person is included in the acquired image, and extracts the face image from acquired image data in the case where the face image is included.

Note that, since an existing technology can be used for face image detection processing and face image extraction processing by the biometric information acquisition unit 302, detailed description thereof is omitted. For example, the biometric information acquisition unit 302 may extract the face image (face area) from the image data, using a learning model learned by a convolutional neural network (CNN). Alternatively, the biometric information acquisition unit 302 may extract the face image using a method such as template matching.

The biometric information acquisition unit 302 delivers the extracted face image to the authentication request unit 303.

The authentication request unit 303 is a means that requests the management server 20 to authenticate the user in front of the management server. The authentication request unit 303 generates an authentication request including the acquired face image and transmits the authentication request to the management server 20.

The authentication request unit 303 receives a response to the authentication request from the management server 20.

When the authentication result is "authentication failed", the authentication request unit 303 notifies a visitor of the fact.

When the authentication result is "authentication succeeded", the authentication request unit 303 notifies the function implementation unit 304 of the fact. In addition, the authentication request unit 303 delivers the "operation information" acquired from the management server 20 to the function implementation unit 304.

The function implementation unit 304 is a means that implements the "baggage checking" function of the baggage checking machine 11. The function implementation unit 304 specifies a boarding flight of the baggage checked in by the user from the acquired operation information, and attaches a label or the like so that the baggage is accommodated in the boarding flight. The operation of the function implementation unit 304 can be the same as the operation of an existing baggage checking machine, and thus detailed description thereof is omitted.

The storage unit 305 is a means that stores information necessary for the operation of the baggage checking machine 11.

### [Another Terminal]

Since basic processing configurations of the other terminals (the passenger passage system 12, the gate device 13, and the boarding gate device 14) included in the boarding procedure system can be the same as the processing configuration of the baggage checking machine 11 illustrated in Fig. 7, detailed description thereof is omitted. Each terminal acquires the biometric information (face image) of the system user and requests the management server 20 to perform authentication using the acquired biometric information. When the authentication is successful, the function allocated to each terminal is executed.

### [Management Server]

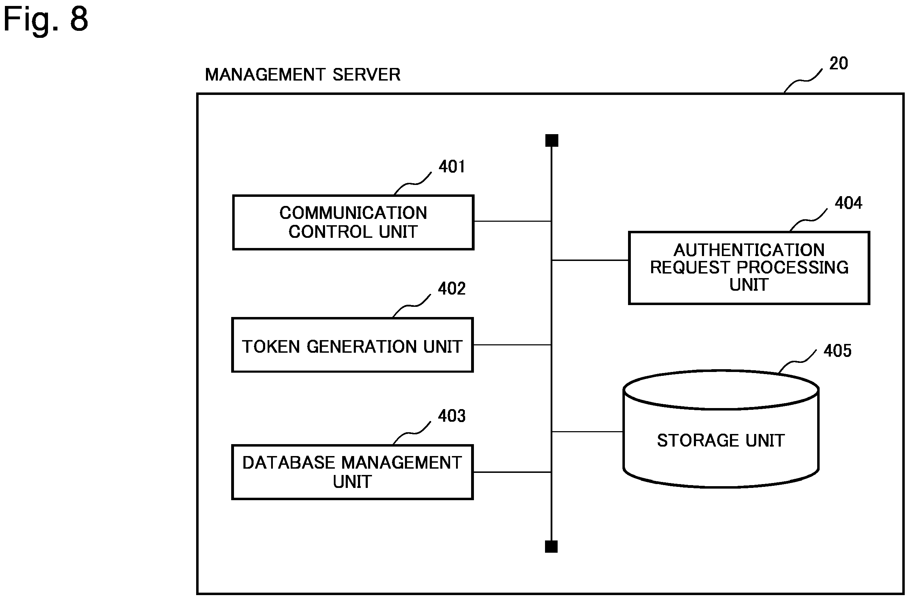

Fig. 8 is a diagram illustrating an example of a processing configuration (processing module) of the management server 20 according to the first example embodiment. Referring to Fig. 8, the management server 20 includes a communication control unit 401, a token generation unit 402, a database management unit 403, an authentication request processing unit 404, and a storage unit 405.

The communication control unit 401 is a means that controls communication with other devices. Specifically, the communication control unit 401 receives data (packets) from the check-in terminal 10 or the like. Furthermore, the communication control unit 401 transmits data to the check-in terminal 10 or the like. The communication control unit 401 delivers data received from another device to another processing module. The communication control unit 401 transmits data acquired from another processing module to another device. In this manner, the another processing module transmits and receives data to and from another device via the communication control unit 401. The communication control unit 401 functions as a transmission unit and a receiving unit.

The token generation unit 402 is a means that generates a token in response to a token generation request from the check-in terminal 10. The token generation unit 402 issues the token when the above-described two determinations are successful.

The first determination is a determination relates to the consistency between the boarding pass information and the passport information. The second determination is a determination relates to the validity of the passport presented on the check-in terminal 10.

The token generation unit 402 makes the first determination. The token generation unit 402 determines whether the person who is permitted to board the aircraft to which the boarding pass has been issued matches the person who has received the issuance of the passport presented on the check-in terminal 10. Specifically, the token generation unit 402 confirms that a situation has not occurred in which the passport presented to the check-in terminal 10 is issued to a user B while a user A is registered as a passenger in the DCS (airline server 30). That is, the token generation unit 402 confirms, by the first determination, the identity between the passport that is the basis for issuing the boarding pass (airline ticket) and the passport presented at the time of system registration.

The token generation unit 402 transmits the boarding pass information acquired from the check-in terminal 10 to the airline server 30. Specifically, the token generation unit 402 transmits, to the airline server 30, the boarding pass information capable of specifying one of a plurality of pieces of reservation information stored in the airline server 30. For example, the token generation unit 402 transmits the boarding pass information such as the airline code, flight number, departure date, and seat number to the airline server 30.

The airline server 30 searches the database, and specifies the passport information relevant to the acquired boarding pass information. The airline server 30 transmits (replies) the specified passport information to the management server 20.

The token generation unit 402 compares the passport information acquired from the check-in terminal 10 with the passport information acquired from the airline server 30, and determines whether the passport information matches the other passport information. At that time, the token generation unit 402 may confirm that all pieces of information described in the passports match, or may confirm that some pieces of information match.

In the case of determining whether some pieces of information match, for example, token generation unit 402 determines whether the passport number and the issuing country included in the two pieces of passport information match. Note that, since the name has an aspect unsuitable for determination of identity, information different from the name (the combination of the passport number and the issuing country) is desirably used to determine whether the two pieces of passport information match.

When the two pieces of passport information match, the token generation unit 402 determines that the boarding pass and the passport presented on the check-in terminal 10 are consistent. When the two pieces of passport information do not match, the token generation unit 402 determines that the boarding pass and the passport presented on the check-in terminal 10 are not consistent.

The token generation unit 402 makes the second determination. The token generation unit 402 determines whether the person who has presented the passport to the check-in terminal 10 and the person who has received the issuance of the passport are the same person. Specifically, it is confirmed that a situation has not occurred in which the passport presented to the check-in terminal 10 has been issued to a user C, but the user standing in front of the check-in terminal 10 is a user D. That is, the check-in terminal 10 confirms that the system user has not presented the passport issued to another person to the check-in terminal 10.

To execute the second determination, the token generation unit 402 extracts the face image (the face image of the system user) included in the token generation request and the passport face image included in the passport information. The token generation unit 402 determines whether these two face images substantially match.

The token generation unit 402 executes collation (one-to-one collation) of the two face images. The token generation unit 402 calculates a feature vector from each of the two images. The token generation unit 402 calculates similarity (for example, Euclidean distance) between the two images, and determines whether the two images are face images of the same person on the basis of a result of threshold processing for the calculated similarity. For example, in a case where the similarity is larger than a predetermined value (in a case where the distance is shorter than a predetermined value), the token generation unit 402 determines that the two face images are of the same person.

When the consistency determination (first determination) between the boarding pass and the passport and the validity determination (second determination) of the passport using the biometric information are successful, the token generation unit 402 issues the token. For example, the token generation unit 402 generates a unique value as the token ID on the basis of date and time of the processing, a sequence number, or the like.

When generating the token (token ID), the token generation unit 402 transmits an affirmative response (token issue) to the check-in terminal 10. When failing to generate the token ID, the token generation unit 402 transmits a negative response (no token issue) to the check-in terminal 10.

When the token ID is successfully generated (issued), the token generation unit 402 delivers the generated token ID, boarding pass information, passport information, and face image (face image of the system user) to the database management unit 403.

The database management unit 403 is a means that manages various databases constructed in the management server 20.

The management server 20 includes a token ID information database and an operation information database.

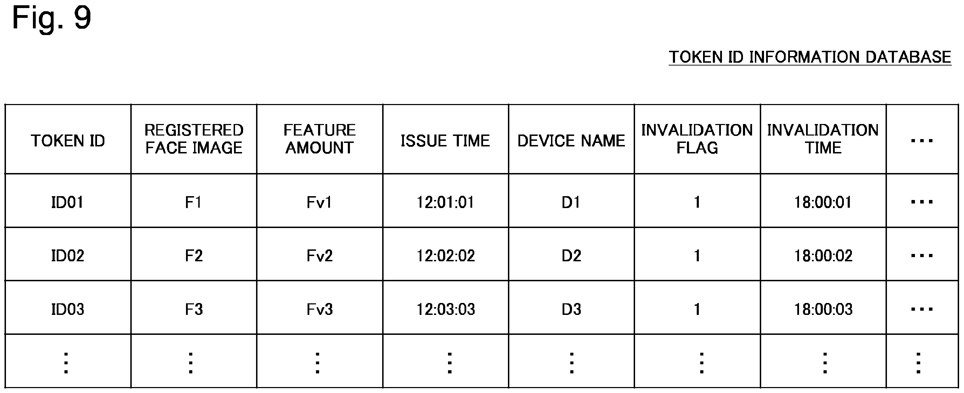

The token ID information database stores at least the token ID and the biometric information of the user in association with each other. Fig. 9 is a diagram illustrating an example of a token ID information database. Referring to Fig. 9, the token ID information database includes fields for storing token ID, registered face image, feature amount, token issue time, token issue device name, invalidation flag, invalidation time, and the like.

As described above, the token ID is an identifier that is temporarily issued. When the user finishes the procedure in the boarding gate device 14, the token ID is invalidated. That is, the token ID is not an identifier that is permanently used, but is a one-time ID having a valid period (life cycle).

The registered face image is a face image of the system user. For example, the registered face image may be a face image of the user captured by the check-in terminal 10, or may be a passport face image. The feature amount is a feature vector generated from the face image. The token issue time is time when the management server 20 issues the token ID. The device name is a device name (check-in terminal 10) of an acquisition source of the registered face image that has triggered issuance of the token ID. The invalidation flag is flag information indicating whether the token ID is valid at the present time. The invalidation flag is set to "1" when the token ID is valid, and is cleared to "0" when the token ID is invalid. The invalidation time is a timestamp when the token ID is invalidated.

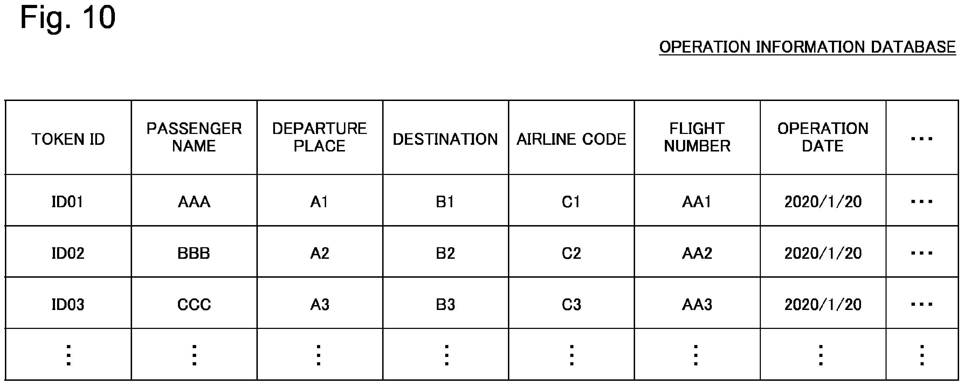

The operation information database is a database that manages information (operation information) necessary for the boarding procedure of the user. Fig. 10 is a diagram illustrating an example of the operation information database. Referring to Fig. 10, the operation information database has fields for storing token ID, passenger name, departure place, destination, airline code, flight number, operation date, and the like. The operation information database may include fields for storing seat number, nationality, passport number, surname and first name, date of birth, gender, and the like. The operation information database stores operation information related to a predetermined operation (procedure operation performed at each touch point) for each token ID.

The information stored in the operation information database is acquired from the boarding pass information and the passport information.

When acquiring the token ID from the token generation unit 402 (when the token ID is issued), the database management unit 403 adds a new entry to the two databases. The database management unit 403 sets setting values in the fields of each database. For example, the database management unit 403 generates the feature amount from the registered face image and registers the generated feature amount in the token ID information database. The database management unit 403 may set initial values (default values) for the fields for which setting values cannot be set.

The authentication request processing unit 404 is a means that processes the authentication request acquired from the terminal. The authentication request includes the biometric information of a person to be authenticated. The authentication request processing unit 404 executes collation processing (one-to-N collation) using the biometric information included in the authentication request and the biometric information included in the token ID information database.

The authentication request processing unit 404 generates the feature amount from the face image acquired from the terminal. The authentication request processing unit 404 extracts feature points from the face image. An existing technique can be used for feature point extraction processing, and thus detailed description thereof is omitted. For example, the authentication request processing unit 404 extracts eyes, a nose, a mouth, and the like as feature points from the face image. Thereafter, the authentication request processing unit 404 calculates a position of each feature point and a distance between the feature points as feature amounts, and generates a feature vector including a plurality of the feature amounts.

The authentication request processing unit 404 sets the generated feature amount (feature vector) as the feature amount on the collation side and sets the feature amount registered in the token ID information database as the feature amount on the registration side. The authentication request processing unit 404 calculates similarity between the feature amount on the collation side and each of the plurality of feature amounts on the registration side. A chi-square distance, a Euclidean distance, or the like can be used as the similarity. Note that the similarity is lower as the distance is longer, and the similarity is higher as the distance is shorter.

The authentication request processing unit 404 determines that the authentication is successful when there is a feature amount whose similarity with respect to the feature amount to be collated is equal to or more than a predetermined value among the plurality of feature amounts registered in the token ID information database.

When the authentication is successful, the authentication request processing unit 404 specifies the token ID relevant to the feature amount having the highest similarity. The authentication request processing unit 404 searches the operation information database using the specified token ID as a key, and specifies relevant operation information (passenger name, departure place, and the like).

The authentication request processing unit 404 transmits an authentication result to the terminal (responds to the authentication request). When the authentication is successful, the authentication request processing unit 404 transmits a response including the fact (authentication success) and the operation information to the terminal. When the authentication fails, the authentication request processing unit 404 transmits a response including the fact (authentication failure) to the terminal.

The storage unit 405 stores various types of information necessary for the operation of the management server 20. In the storage unit 405, the token ID information database and the operation information database are built.

### [System Operation]

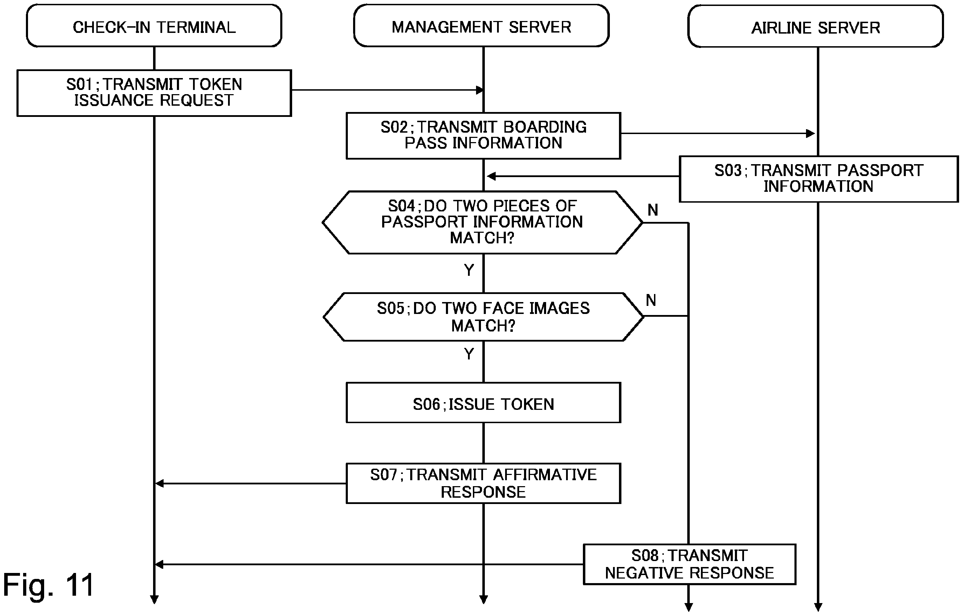

Next, an operation of the boarding procedure system according to the first example embodiment will be described. Fig. 11 is a sequence diagram illustrating an example of an operation of the boarding procedure system according to the first example embodiment. Note that an operation at the time of system registration of the user will be described with reference to Fig. 11.

The check-in terminal 10 transmits the token issuance request to the management server 20 (step S01).

When receiving the token issuance request, the management server 20 executes a determination regarding the consistency between the boarding pass information and the passport information (executes the first determination).

The management server 20 transmits some or all pieces of the boarding pass information acquired from the check-in terminal 10 to the airline server 30 (step S02).

The airline server 30 searches the database, and transmits some or all pieces of the passport information relevant to the acquired boarding pass information to the management server 20 (step S03).

The management server 20 determines whether the passport information acquired from the check-in terminal 10 matches the passport information acquired from the airline server 30 (step S04). That is, the management server 20 determines whether the two pieces of passport information are information described in the same passport (information obtained from the same passport).

When the two pieces of passport information do not match (step S04, No branch), the management server 20 rejects the token issuance request. In this case, the management server 20 transmits a negative response to the check-in terminal 10 (step S08).

When the two pieces of passport information match (step S04, Yes branch), the management server 20 executes the determination regarding the validity of the passport (executes the second determination).

The management server 20 determines whether the face image captured by the check-in terminal 10 matches the passport face image (step S05).

When the two face images do not match (step S05, No branch), the management server 20 rejects the token issuance request. In this case, the management server 20 transmits a negative response to the check-in terminal 10 (step S08).

When the two face images match (step S05, Yes branch), the management server 20 issues the token (step S06). In this case, the management server 20 transmits an affirmative response to the check-in terminal 10 (step S07).

As described above, the management server 20 according to the first example embodiment receives the token issuance request including at least the boarding pass information and the passport information from the check-in terminal 10. The management server 20 makes the first determination regarding the consistency between the boarding pass information and the passport information. The management server 20 generates the token for the user to use the boarding procedure using the biometric information on the basis of the result of the first determination. More specifically, the management server 20 transmits the acquired boarding pass information to the airline server 30, and receives the passport information relevant to the boarding pass information transmitted from the airline server 30. In the case where the passport information included in the token issuance request matches the passport information received from the airline server 30, and the presented passport is valid, the management server 20 generates the token. As a result, the token for using the boarding procedure using the biometric authentication is not issued to a user who is not qualified to use the boarding procedure. Therefore, the user who is not qualified to use the boarding procedure using the biometric authentication is excluded from the users using the boarding procedure using the biometric authentication.

In addition, by executing the second determination regarding the validity of the passport, the management server 20 excludes the user who intends to use the boarding procedure using the biometric authentication using the passport of another person. In the boarding procedure system according to the first example embodiment, the identity between the passenger and the user (system user) who operates the check-in terminal 10 and the identity between the user who has received the issuance of the passport and the system user are confirmed with the passport (passport information) as a starting point. Such two determinations ensure that the token is issued to the user who is truly qualified to receive the biometric authentication, and prevent the token from being issued to a user who has illegally obtained a boarding pass or a passport (a user impersonating a passenger or the like).

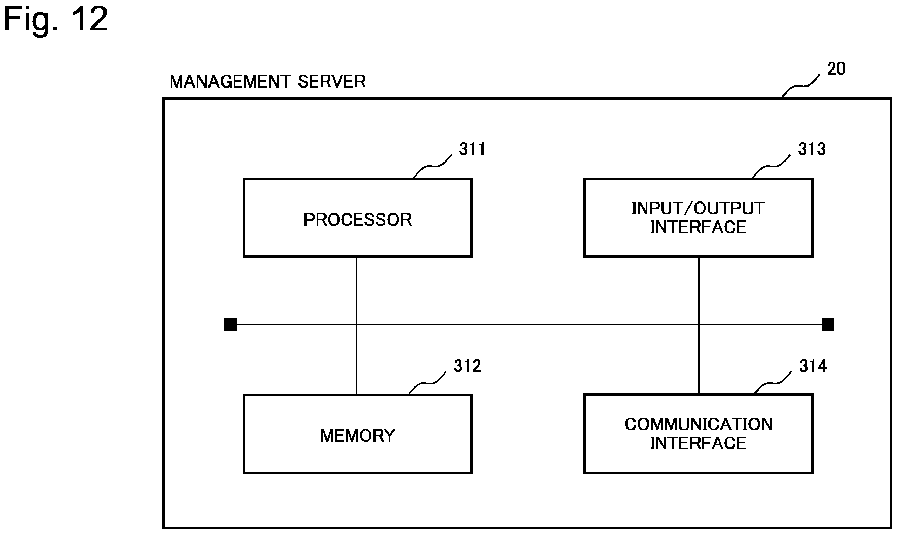

Next, hardware of the devices constituting the boarding procedure system will be described. Fig. 12 is a diagram illustrating an example of a hardware configuration of the management server 20.

The management server 20 can be configured by an information processing device (so-called computer), and has the configuration illustrated in Fig. 12. For example, the management server 20 includes a processor 311, a memory 312, an input/output interface 313, a communication interface 314, and the like. The components such as the processor 311 are connected by an internal bus or the like and are configured to be able to communicate with each other.

Note that the configuration illustrated in Fig. 12 is not intended to limit the hardware configuration of the management server 20. The management server 20 may include hardware (not illustrated) or may not include the input/output interface 313 as necessary. Further, the number of processors 311 or the like included in the management server 20 is not limited to the example of Fig. 12, and for example, a plurality of processors 311 may be included in the management server 20.

The processor 311 is a programmable device such as a central processing unit (CPU), a micro processing unit (MPU), or a digital signal processor (DSP). Alternatively, the processor 311 may be a device such as a field programmable gate array (FPGA) or an application specific integrated circuit (ASIC). The processor 311 executes various programs including an operating system (OS).

The memory 312 is a random access memory (RAM), a read only memory (ROM), a hard disk drive (HDD), a solid state drive (SSD), or the like. The memory 312 stores an OS program, an application program, and various data.

The input/output interface 313 is an interface of a display device or an input device (not illustrated). The display device is, for example, a liquid crystal display or the like. The input device is, for example, a device that receives a user operation of a keyboard or a mouse.

The communication interface 314 is a circuit, a module, or the like that communicates with another device. For example, the communication interface 314 includes a network interface card (NIC) or the like.

The functions of the management server 20 are implemented by various processing modules. The processing modules are implemented by, for example, the processor 311 executing a program stored in the memory 312. Furthermore, the program can be recorded in a computer-readable storage medium. The storage medium may be a non-transient (non-transitory) medium such as a semiconductor memory, a hard disk, a magnetic recording medium, or an optical recording medium. That is, the present invention can also be embodied as a computer program product. In addition, the program can be downloaded via a network or updated using a storage medium storing the program. Further, the processing module may be implemented by a semiconductor chip.

The check-in terminal 10, the airline server 30, and the like can also be configured by an information processing device similarly to the management server 20, and since there is no difference in the basic hardware configuration from the management server 20, the description thereof is omitted. The check-in terminal 10 or the like may include a camera, a scanner, or the like.

The management server 20 is equipped with a computer, and can implement the function of the management server 20 by causing the computer to execute a program. In addition, the management server 20 executes a token issuance method by the program.

### [Modification]

Note that the configuration, operation, and the like of the boarding procedure system described in the above example embodiment are merely examples, and are not intended to limit the configuration and the like of the system.

In the above example embodiment, the case where the token is issued when a problem is not detected in both the first determination and the second determination has been described. However, if it can be confirmed by another device or the like that the user possesses the correct passport, the management server 20 does not need to execute the second determination. Alternatively, the second determination is unnecessary even in a case where the prior verification regarding the validity of the passport is performed by a staff member of the airport or the airline company. In this case, the management server 20 may receive the token issuance request including at least the boarding pass information and the passport information, and perform the first determination.

In the above example embodiment, it has been described that the system registration is performed after the check-in procedure of the user but the system registration may be performed before the check-in procedure. In this case, since the boarding pass is not issued before the check-in procedure, the management server 20 may confirm the consistency between the airline ticket instead of the boarding pass and the passport. That is, the check-in terminal 10 transmits airline ticket information (some or all pieces of information described in the airline ticket) to the management server 20. The management server 20 transmits the airline ticket information to the airline server 30, and acquires the relevant passport information. The management server 20 may execute the first determination by confirming matching between the two pieces of passport information.

In the above example embodiment, the case where the system registration (registration for implementing the boarding procedure using biometric authentication) is performed by the check-in terminal 10 has been described. However, the system registration may be performed by a device or a terminal other than the check-in terminal 10. For example, a device dedicated to system registration may be installed in the airport, or system registration may be performed by a terminal (touch point) such as the baggage checking machine 11 or the passenger passage system 12.

In the above example embodiment, the case where the series of boarding procedures is performed by the biometric authentication has been described, but some procedures may be performed by the biometric authentication. For example, in Fig. 2, system registration may be performed in the baggage checking machine 11, and procedures (security inspection and the like) after checking baggage may be performed by the biometric authentication. In other words, some of the series of boarding procedures may be performed in a manned booth or the like.

In the above example embodiment, the management server 20 and the airline server 30 have been described as separate devices, but the functions of these devices may be implemented by one device (server). Alternatively, the token ID information database and the operation information database constructed in the management server 20 may be constructed in a database server different from the management server 20. That is, the boarding procedure system may include various means (for example, token generation means) described in the above example embodiment.

In the above example embodiment, the case where the authentication request includes the face image has been described, but the authentication request may include a feature amount generated from the face image. In this case, the management server 20 may process the authentication request using the feature amount extracted from the authentication request and the feature amount registered in the token ID information database.

A form of data transmission and reception between the check-in terminal 10 and the like and the management server 20 is not particularly limited, but data transmitted and received between these devices may be encrypted. The boarding pass information and the passport information include personal information, and in order to appropriately protect the personal information, it is desirable that encrypted data be transmitted and received.

In the flowcharts (flowchart and sequence diagram) used in the above description, a plurality of steps (processes) is described in order, but the execution order of the steps executed in the example embodiments is not limited to the described order. In the example embodiments, for example, the order of the illustrated steps can be changed in a range including no trouble in terms of content, such as executing the processes in parallel.

The above example embodiments have been described in detail in order to facilitate understanding of the present disclosure, and it is not intended that all the configurations described above are necessary. In addition, in the case where a plurality of example embodiments has been described, the example embodiment may be used alone or in combination. For example, a part of the configuration of the example embodiment can be replaced with the configuration of another example embodiment, or the configuration of another example embodiment can be added to the configuration of the example embodiment. Furthermore, another configuration may be added to, deleted from, or replaced with another configuration a part of the configuration of the example embodiment.

Although the industrial applicability of the present invention is apparent from the above description, the present invention is suitably applicable to a boarding procedure system at an airport or the like.

Some or all of the above example embodiments can be described as but are not limited to the following supplementary notes.

### [Supplementary Note 1]

A management server including:
a receiving unit configured to receive, from a terminal, a token issuance request including at least boarding pass information described on a boarding pass and passport information described in a passport; and
a generation unit configured to make a first determination regarding consistency between the boarding pass information and the passport information and generate a token for a user to use a boarding procedure using biometric information based on a result of the first determination.

### [Supplementary Note 2]

The management server according to supplementary note 1, in which the generation unit generates the token in a case where a person who is permitted to board an aircraft to which the boarding pass has been issued matches a person who has received issuance of the passport presented on the terminal.

### [Supplementary Note 3]

The management server according to supplementary note 1 or 2, in which
the generation unit transmits the boarding pass information included in the token issuance request to an airline server that stores passport information acquired at the time of reserving an airline ticket and reservation information of the airline ticket in association with each other, and receives the passport information relevant to the transmitted boarding pass information from the airline server, and
generates the token in a case where the passport information included in the token issuance request matches the passport information received from the airline server.

### [Supplementary Note 4]

The management server according to supplementary note 3, in which the generation unit determines whether the passport information included in the token issuance request matches the passport information received from the airline server, using information different from a name.

### [Supplementary Note 5]

The management server according to supplementary note 3 or 4, in which the generation unit determines whether the passport information included in the token issuance request matches the passport information received from the airline server, based on a passport number and an issuing country.

### [Supplementary Note 6]

The management server according to any one of supplementary notes 1 to 5, in which the generation unit makes a second determination regarding validity of the passport presented to the terminal, and generates the token based on results of the first and second determinations.

### [Supplementary Note 7]

The management server according to supplementary note 6, in which the generation unit makes the second determination regarding validity of the passport by determining whether a person who has presented the passport to the terminal and the person who has received issuance of the passport presented to the terminal are the same person.

### [Supplementary Note 8]

The management server according to supplementary note 6 or 7, in which
the token issuance request includes biometric information of the user, and
the generation unit makes the second determination by one-to-one collation using the biometric information included in the token issuance request and biometric information described in the passport.

### [Supplementary Note 9]

The management server according to any one of supplementary notes 1 to 8, further including: a transmission unit configured to transmit a response to the token issuance request to the terminal.

### [Supplementary Note 10]

A system including:
a terminal; and
a management server connected to the terminal, in which
the management server includes
a receiving unit configured to receive, from the terminal, a token issuance request including at least boarding pass information described on a boarding pass and passport information described in a passport, and
a generation unit configured to make a first determination regarding consistency between the boarding pass information and the passport information and generate a token for a user to use a boarding procedure using biometric information based on a result of the first determination.

### [Supplementary Note 11]

A token issuance method including:
by a management server,
receiving, from a terminal, a token issuance request including at least boarding pass information described on a boarding pass and passport information described in a passport; and
making a first determination regarding consistency between the boarding pass information and the passport information and generating a token for a user to use a boarding procedure using biometric information based on a result of the first determination.

### [Supplementary Note 12]

A computer-readable storage medium storing a program for causing a computer mounted on a management server to execute:
processing of receiving, from a terminal, a token issuance request including at least boarding pass information described on a boarding pass and passport information described in a passport; and
processing of making a first determination regarding consistency between the boarding pass information and the passport information and generating a token for a user to use a boarding procedure using biometric information based on a result of the first determination.

The disclosures of the cited prior art documents are incorporated herein by reference. Although the example embodiments of the present invention have been described, the present invention is not limited to these example embodiments. It will be understood by those skilled in the art that these example embodiments are exemplary only and that various modifications are possible without departing from the scope and spirit of the present invention. That is, it goes without saying that the present invention includes various modifications and corrections that can be made by those skilled in the art in accordance with the entire disclosure including the claims and the technical idea.

### [Reference signs List]

- 10: check-in terminal
- 11: baggage checking machine
- 12: passenger passage system
- 13: gate device
- 14: boarding gate device
- 20, 100: management server
- 30: airline server
- 101: receiving unit
- 102: generation unit
- 201, 301, 401: communication control unit
- 202: system registration unit
- 203: token issuance request unit
- 204: message output unit
- 205: check-in execution unit
- 206, 305, 405: storage unit
- 211: boarding pass information acquisition unit
- 212: passport information acquisition unit
- 213, 302: biometric information acquisition unit
- 303: authentication request unit
- 304: function implementation unit
- 311: processor
- 312: memory
- 313: input/output interface
- 314: communication interface
- 402: token generation unit
- 403: database management unit
- 404: authentication request processing unit

## Claims

1. A management server comprising:
a receiving unit configured to receive, from a terminal, a token issuance request including at least boarding pass information described on a boarding pass and passport information described in a passport; and
a generation unit configured to make a first determination regarding consistency between the boarding pass information and the passport information and generate a token for a user to use a boarding procedure using biometric information based on a result of the first determination.

2. The management server according to claim 1, wherein the generation unit generates the token in a case where a person who is permitted to board an aircraft to which the boarding pass has been issued matches a person who has received issuance of the passport presented on the terminal.

3. The management server according to claim 1 or 2, wherein
the generation unit transmits the boarding pass information included in the token issuance request to an airline server that stores passport information acquired at the time of reserving an airline ticket and reservation information of the airline ticket in association with each other, and receives the passport information relevant to the transmitted boarding pass information from the airline server, and
generates the token in a case where the passport information included in the token issuance request matches the passport information received from the airline server.

4. The management server according to claim 3, wherein the generation unit determines whether the passport information included in the token issuance request matches the passport information received from the airline server, using information different from a name.

5. The management server according to claim 3 or 4, wherein the generation unit determines whether the passport information included in the token issuance request matches the passport information received from the airline server, based on a passport number and an issuing country.

6. The management server according to any one of claims 1 to 5, wherein the generation unit makes a second determination regarding validity of the passport presented to the terminal, and generates the token based on results of the first and second determinations.

7. The management server according to claim 6, wherein the generation unit makes the second determination regarding validity of the passport by determining whether a person who has presented the passport to the terminal and the person who has received issuance of the passport presented to the terminal are the same person.

8. The management server according to claim 6 or 7, wherein
the token issuance request includes biometric information of the user, and
the generation unit makes the second determination by one-to-one collation using the biometric information included in the token issuance request and biometric information described in the passport.

9. The management server according to any one of claims 1 to 8, further comprising: a transmission unit configured to transmit a response to the token issuance request to the terminal.

10. A system comprising:
a terminal; and
a management server connected to the terminal, wherein
the management server includes
a receiving unit configured to receive, from the terminal, a token issuance request including at least boarding pass information described on a boarding pass and passport information described in a passport, and
a generation unit configured to make a first determination regarding consistency between the boarding pass information and the passport information and generate a token for a user to use a boarding procedure using biometric information based on a result of the first determination.

11. A token issuance method comprising:
by a management server,
receiving, from a terminal, a token issuance request including at least boarding pass information described on a boarding pass and passport information described in a passport; and
making a first determination regarding consistency between the boarding pass information and the passport information and generating a token for a user to use a boarding procedure using biometric information based on a result of the first determination.

12. A computer-readable storage medium storing a program for causing a computer mounted on a management server to execute:
processing of receiving, from a terminal, a token issuance request including at least boarding pass information described on a boarding pass and passport information described in a passport; and
processing of making a first determination regarding consistency between the boarding pass information and the passport information and generating a token for a user to use a boarding procedure using biometric information based on a result of the first determination.
